# EUROPEAN PATENT SPECIFICATION

(11) **EP 2 351 638 B1**
(45) Date of publication and mention of the grant of the patent: **23.11.2016**
(21) Application number: 09823352.1
(22) Date of filing: 30.10.2009
(51) Int. Cl.: B29C 39/04, B29C 39/24, B29C 45/00, B29K 75/00, B29L 11/00, B29D 11/00, B29C 33/00, B29C 39/00, B29C 39/26

(54) **PLASTIC LENS MANUFACTURING METHOD AND MANUFACTURING DEVICE**
VERFAHREN UND VORRICHTUNG ZUR HERSTELLUNG EINER KUNSTSTOFFLINSE
PROCÉDÉ ET DISPOSITIF DE FABRICATION DE LENTILLE EN MATIÈRE PLASTIQUE

(30) Priority: 31.10.2008 JP 2008282588
(43) Date of publication of application: 03.08.2011
(73) Proprietor: Hoya Corporation, Tokyo 161-8525 (JP)
(72) Inventor: OKAMOTO, Yasuhisa, Tokyo 161-8525 (JP); SUNAGAWA, Yukiaki, Tokyo 161-8525 (JP)
(74) Representative: Betten & Resch
(86) International application number: PCT/JP2009/005801
(87) International publication number: WO 2010/050239

(56) References cited:
- WO-A1-2008/108280
- JP-A- 2006 082 421
- JP-A- 2006 082 421
- JP-A- 2006 205 710
- JP-A- 2006 231 825
- JP-A- 2006 281 617
- JP-A- 2006 281 617
- JP-T- 2007 512 974
- US-A1- 2008 018 005
- US-A1- 2008 029 914

## Description

### Technical field

The present invention relates to a manufacturing method and manufacturing apparatus of a plastic lens capable of manufacturing plastic lenses with high quality and little optical defects from a highly viscous plastic lens starting material liquid with a rapid initial rate of polymerization.

### Background technique

Known methods of manufacturing plastic lenses include the cast polymerization method, in which a polymerizable plastic lens starting material liquid is cast into a casting mold and polymerized within the casting mold. For example, Document 1 (Japanese Unexamined Patent Publication (KOKAI) No. 2006-205710) and English language family members US2008/0018005A1 and US2008/0029914A1, Document 2 (Japanese Unexamined Patent Publication (KOKAI) No. 2006-231600), and Document 3 (International Publication No. WO 2008/108280 pamphlet) disclose various means of manufacturing plastic lenses from highly viscous plastic lens starting material liquids with rapid initial rates of polymerization by casting mold polymerization. The contents of the above applications are expressly incorporated herein by reference in their entirety.

### Summary of the invention

Above-cited Documents 1 to 3 disclose methods of casting whereby the casting mold is secured in a state that is approximately vertical with respect to the horizontal plane from the start to the end of casting of the starting material liquid, and casting is conducted by gradually bringing the tip (casting nozzle) of a flexible casting tube (tube) mounted on the tip of the discharge outlet of a mixing and discharging apparatus that simultaneously mixes and discharges the starting material liquid closer to the tip of the casting inlet of the casting mold. Conducting casting with the casting mold secured in such a manner is advantageous in manufacturing plastic eyeglass lenses, which require a significant reduction in optical defects. To guide the starting material liquid that is discharged by the mixing and discharging apparatus to the secured casting mold, the flexible tube is advantageous from the perspective of the freedom of operation of the casting nozzle, in terms of the manufacturing equipment required, and the like.

However, in the case of a highly viscous starting material liquid with a rapid initial rate of polymerization, polymerization continues while the mixed starting material liquid is moving through the flexible tube, and the viscosity increases as the starting material liquid approaches the tip side of the flexible tube. The starting material liquid thus tends to adhere to the inner wall at the tip of the flexible tube and to the casting nozzle, making it necessary to regularly replace the flexible tube and casting nozzle, and sometimes compromising operating efficiency.

Accordingly, to enhance operating efficiency, it is conceivable to move the casting mold side without employing a flexible tube (tubeless operation). However, particularly when manufacturing plastic lenses from a starting material liquid that is highly viscous and has a rapid initial rate of polymerization, displacement of the casting mold in the course of casting the starting material liquid into the cavity of the casting mold causes striae and the entrainment of bubbles due to movement of the liquid surface within the cavity.

To enhance operating efficiency, there is need for a means for obtaining high quality plastic lenses when the casting mold is placed in a movable state, as set forth above.

Accordingly, it is an object of the present invention to provide a means for manufacturing a high quality plastic lens, particularly from plastic lens starting material liquids that are highly viscous and have rapid initial polymerization rates, by casting a starting material liquid with a casting mold in a movable state.

The present inventors conducted extensive research to achieve the above-stated object, resulting in the following discovery.

The casting molds described in the above Documents 1 to 3 are each comprised of a cavity and a casting hole for introducing the starting material liquid into the cavity. The starting material liquid that is discharged from the discharge hole of the mixing and discharging apparatus is introduced into the cavity through the casting hole. Here, when the casting mold is moved while the starting material liquid is moving within the cavity, the flow of starting material liquid within the cavity increases with movement of the casting mold. In particular, in the case of a highly viscous starting material liquid with a high initial rate of polymerization, traces of the flow appear as striae and bubbles in the polymerized product. Since the portion that polymerizes and cures within the cavity is employed as a lens, such striae and bubbles become optical defects in the lens. On the other hand, while the starting material liquid being casted has not yet reached the cavity, that is, while it is moving through the casting hole, striae and bubbles tend not to occur within the cavity even when the casting mold is moved.

Based on the above discoveries, the present inventors found that the above object could be achieved by changing the posture of the casting mold while the starting material liquid was moving through the casting hole. The present invention was devised on that basis.

An aspect of the present invention relates to a method of manufacturing a plastic lens comprising:
discharging a plastic lens starting material liquid from a tip opening of a discharge hole of a mixing and discharging part, the mixing and discharging part comprising a mixing chamber comprising a stirring means that stirs a plastic lens starting material liquid comprising multiple polymerizable components and the discharge hole communicating with the mixing chamber;
casting the plastic lens starting material liquid that has been discharged into a casting mold, the casting mold comprising a cavity and a casting hole for introducing the plastic lens starting material into the cavity, and the plastic lens starting material being cast into the casting mold through a tip opening of the casting hole; and
polymerizing the plastic lens starting material that has been cast within the casting mold to obtain a polymerized product
the plastic lens starting material liquid is discharged through the discharge hole while maintaining the casting mold in a state in which the tip opening of the casting hole is separated from the tip opening of the discharge hole, characterized in that a posture of the casting mold is then changed from that state to bring the tip opening of the casting hole closer to the tip opening of the discharge hole to begin the casting, as well as before the plastic lens starting material liquid that has been cast reaches an interior of the cavity, the tip opening of the casting hole and the tip opening of the discharge hole are connected to secure the casting mold, and the secured state is maintained until the cavity is filled with the plastic lens starting material liquid.

The casting mold being maintained in the state in which the tip opening of the casting hole is separated from the tip opening of the discharge hole may be in an inclined state relative to a horizontal plane, as well as in the secured state, the casting mold may be in roughly vertical state relative to the horizontal plane.

The casting mold may have a flat surface around the tip opening of the casting hole and in the secured state, the flat surface may come into tight contact with the tip opening of the discharge hole.

During the discharging of the plastic lens starting material liquid, the discharge hole may be secured with its axial direction positioned horizontally.

The change in the posture of the casting mold may be carried out by moving vertically downward the casting mold which is in the inclined state relative to the horizontal plane, and then changing the incline of the casting mold relative to the horizontal plane.

Steps from the casting of the plastic lens starting material liquid to the obtaining of molded product may be carried out with multiple casting molds sequentially to obtain multiple plastic lenses.

After the cavity is filled with the plastic lens starting material liquid, the discharging may be stopped while continuing stirring of the plastic lens starting material liquid in the mixing chamber, and the stopped discharging may be recommenced when the plastic lens starting material liquid is cast into a new casting mold.

After recommencing the discharging, the casting may be carried out into the new casting mold after discharging the plastic lens starting material liquid that has been retained within the discharge hole during the stopping of the discharging.

The plastic lens starting material liquid may be a mixed liquid of the following component (A) and component (B):
component (A): isocyanate terminal prepolymer in the form of a reaction product of an aliphatic diisocyanate having an intramolecular cyclic structure and a diol having an average molecular weight of 300-2,500; component (B): one or more aromatic diamines denoted by general formula (I) (in general formula (I), R₁, R₂ and R₃ are each independently any of a methyl group, ethyl group or thiomethyl group).

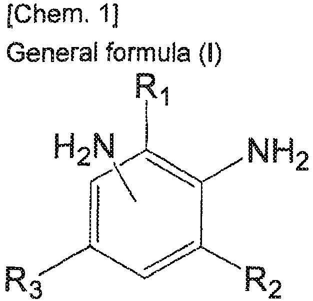

A further aspect of the present invention relates to a manufacturing apparatus of a plastic lens used in the above method of manufacturing a plastic lens comprising:
a mixing and discharging means that stirs and discharges a plastic lens starting material liquid comprising multiple polymerizable components;
a casting mold holding means that holds a casting mold in movable fashion;
a posture changing means that changes a posture of the casting mold being held by the casting mold holding means; and
a control element that controls at least one from among stirring and discharging by the mixing and discharging means and posture changing by the posture changing means.

The posture changing means may comprise a vertical position changing means that changes a position of the casting mold in a vertical direction relative to a horizontal plane, and an incline changing means that changes an incline of the casting mold relative to the horizontal plane.

According to the present invention, high-quality plastic eyeglass lenses can be manufactured from a highly viscous starting material liquid with a rapid initial rate of polymerization. According to the present invention, tubeless operation becomes possible and thus tubeless operation becomes possible to greatly increase workability.

### Modes for carrying out the invention

### [Method of manufacturing plastic lens]

The method of manufacturing a plastic lens of the present invention is a method of manufacturing a plastic lens comprising discharging a plastic lens starting material liquid from a tip opening of a discharge hole of a mixing and discharging part, the mixing and discharging part comprising a mixing chamber comprising a stirring means that stirs a plastic lens starting material liquid comprising multiple polymerizable components and the discharge hole communicating with the mixing chamber, casting the plastic lens starting material liquid that has been discharged into a casting mold, the casting mold comprising a cavity and a casting hole for introducing the plastic lens starting material into the cavity, and the plastic lens starting material being cast into the casting mold through a tip opening of the casting hole, and polymerizing the plastic lens starting material that has been cast within the casting mold to obtain a polymerized product. In the method of manufacturing a plastic lens of the present invention, the plastic lens starting material liquid is discharged through the discharge hole while maintaining the casting mold in a state in which the tip opening of the casting hole is separated from the tip opening of the discharge hole, a posture of the casting mold is then changed from that state to bring the tip opening of the casting hole closer to the tip opening of the discharge hole to begin the casting, as well as before the plastic lens starting material liquid that has been cast reaches an interior of the cavity, the tip opening of the casting hole and the tip opening of the discharge hole are connected to secure the casting mold, and the secured state is maintained until the cavity is filled with the plastic lens starting material liquid. Following polymerization of the starting material liquid that has filled the casting mold, the polymerized product within the casting hole is separated from the polymerized product within the cavity and the casting mold is removed, making it possible to obtain a lens-shaped molded product.

As set forth above, by securing the casting mold before the starting material liquid that is being introduced into the casting mold is introduced into the cavity through the casting hole, and maintaining the casting mold in a secured state while the starting material liquid is moving into the cavity, the flow of starting material liquid within the cavity can be reduced with moving of the casting mold to cast the starting material liquid, making it possible to obtain a high-quality plastic lens.

The present invention will be described in greater detail below with reference to drawings.

### Casting mold

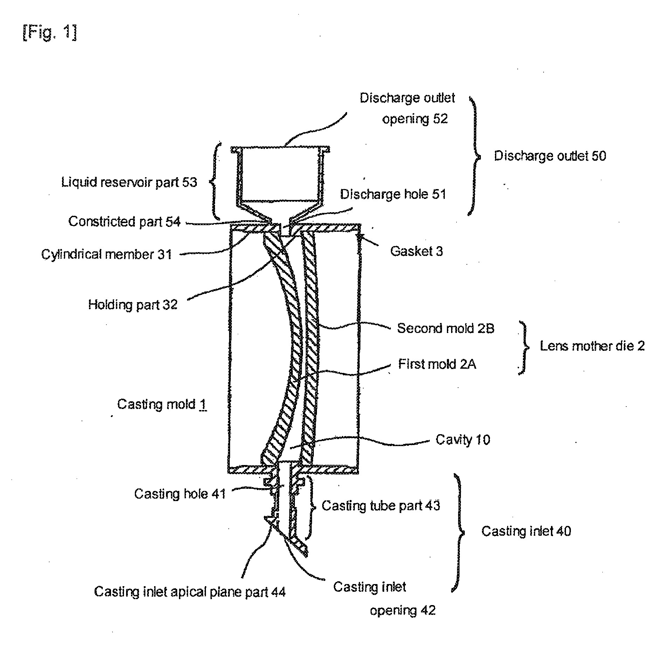

Fig. 1 shows an example of a casting mold that can be employed in the manufacturing method of the present invention. However, the casting mold employed in the present invention is not limited to the embodiment shown in Fig. 1, and need only have a cavity and a casting hole for introducing a starting material liquid into the cavity. Casting mold 1 shown in Fig. 1 is desirably configured for use with casting hole 41 that is positioned beneath cavity 10 during casting of the starting material liquid. When the starting material liquid is cast from beneath cavity 10, the starting material liquid is cast from below the surface of the starting material liquid that has already been introduced, affording the advantages of tending to prevent air from being entrained into casting mold 1 during casting and tending to prevent bubbles. This is particularly effective when employing a highly viscous starting material liquid having a high initial rate of polymerization in which any bubbles that form are difficult to remove.

Casting mold 1 shown in Fig. 1 comprises cavity 10 constituting a space the interior of which corresponds to the shape of the lens to be molded. Casting inlet 40, for casting starting material liquid into cavity 10, and discharge outlet 50, for discharging the gas in cavity 10 or the above-described mixed liquid to the exterior of casting mold 1, are positioned diametrically opposite each other. In casting mold 1 shown in Fig. 1, a pair of lens mother dies 2 (one mold forming one surface of the lens and another mold forming the other surface thereof) are disposed opposite each other at a prescribed distance. Annular gasket 3 is disposed around pair of molds 2. Cavity 10 is formed by molds 2 and gasket 3. In Fig. 1, first mold 2A and second mold 2B have molding surfaces for forming the optically functional surfaces of a plastic lens. For example, first mold 2A can be a convex mold (lower mold) having a molding surface on a convex surface side for forming the back surface (concave surface) of a plastic lens, and second mold 2B can be a concave mold (upper mold) having a molding surface on a concave side for molding the front surface (convex surface) of the plastic lens. However, these are not limitations. The cylindrical member 31 of gasket 3 is cylindrical in shape. The inner diameter thereof is essentially identical to, or slightly smaller than, the outer diameter of first mold 2A and second mold 2B. It suffices for cylindrical member 31 to have a height capable of ensuring the thickness of the perimeter portion of the lens to be molded (the spacing of the perimeter portion of cavity 10) and the thickness required to maintain the perimeter portions of first mold 2A and second mold 2B. When second mold 2B has a convex shape facing the opening of cylindrical member 31, the height of cylindrical member 31 is desirably set so that the apex of the convex surface of second mold 2B does not extend beyond the outer wall surface of cylindrical member 31 when observed from directly to the side of casting mold 1. Reference can be made to Documents 1 to 3 for the details of the casting mold shown in Fig. 1.

Casting inlet 40 of gasket 3 is comprised of a casting inlet apical part, casting tube part 43 connecting the casting inlet apical part and the outer wall surface of cylindrical member 31, and a casting hole (through-hole) 41 passing through the casting inlet apical part and the interior of casting tube part 43 to connect the interior of cylindrical member 31 to the exterior.

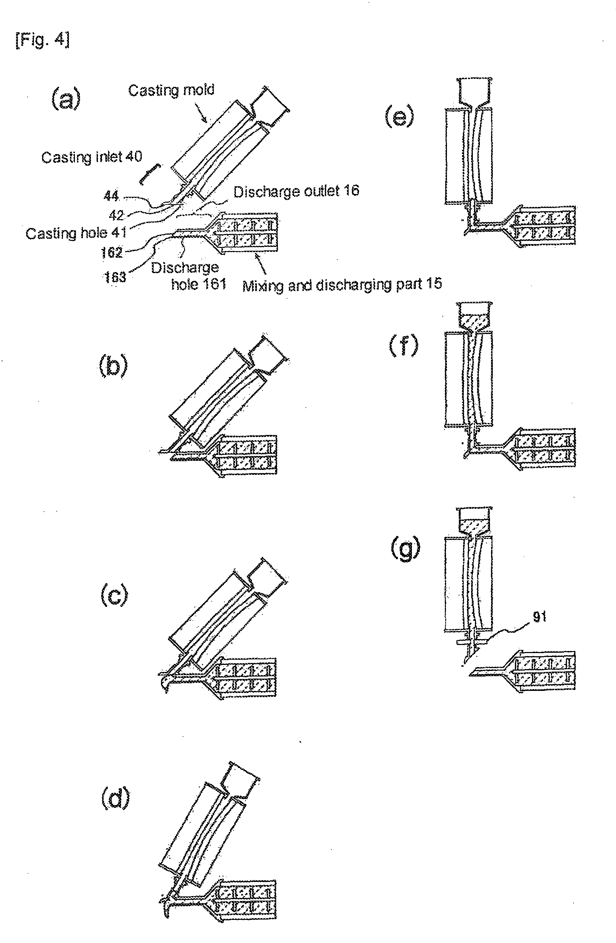

In the casting inlet apical part, from the perspective of increasing the tightness of contact with discharge outlet tip 163 shown in Fig. 4, a flat surface (casting inlet apical plane part) 44 is desirably formed around tip opening 42. As shown in Fig. 4, the shape of the tips of discharge outlet 16 and casting inlet 40 are desirably flat surfaces that are inclined relative to the perpendicular plane in the axial direction of discharge hole 161 and casting hole 41. The angles of incline are desirably identical in the axial direction of each hole (in Fig. 4, for example, both are about 45°). For example, since casting hole 41 is round in cross section and casting inlet apical plane part 44 is inclined relative to the axis of casting hole 41, casting inlet opening 42 is formed with an elliptical shape.

The inner diameter of casting hole 41 can be formed to be either identical to or slightly smaller than the inner diameter of discharge hole 161 of discharge hole 16, with the same angle of incline. In that case, opening 42 of casting hole 41 can be of an elliptical shape that is the same or a little smaller and similar in size to opening 162 of discharge hole 16. In casting mold 1 shown in Fig. 1, the external shape of casting inlet apical plane part 44 is comprised of a roughly square, flat surface, with opening 42 on the casting hole tip side being positioned roughly in the center thereof. However, the shape of casting inlet apical plane part 44 is not limited thereto. For example, a circle or an ellipse, or a polygonal shape such as a square or triangle, is also possible. Casting tube part 43 can be bent to facilitate parting and breaking of resin that has polymerized in casting hole 41.

Discharge outlet 50 is comprised of discharge hole (through-hole) 51 connecting cavity 10 to the exterior; liquid reservoir part 53 having an indentation connecting with cavity 10 through discharge hole 51; and constricted part 54 connecting liquid reservoir part 53 to the outer wall surface of cylindrical member 31. Discharge outlet opening 52 is provided in the upper end portion of liquid reservoir part 53. Discharge hole 51 is provided at a position diametrically opposite from casting hole 41. Positioning discharge hole 51 diametrically relative to casting hole 41 permits casting without hindering the discharge of gas all the way to the end when casting a starting material liquid with casting hole 40 at the bottom. Since constricted part 54 is thinner than liquid reservoir part 53, it can be bent to facilitate parting and breaking of resin that has polymerized in discharge hole 51.

### Mixing and discharging part

The mixing and discharging part comprises a mixing chamber comprising a stirring means that stirs a plastic lens starting material liquid comprising multiple polymerizable components and a discharge outlet comprising a discharge hole communicating with the mixing chamber. Examples of the stirring means include a rapidly rotating shaft, a static mixer and the like. In particular, a reaction injection molding ("RIM" hereinafter) machine is desirably employed to mix highly viscous polymerizable components with rapid initial rates of polymerization, such as components (A) and (B) descried further below.

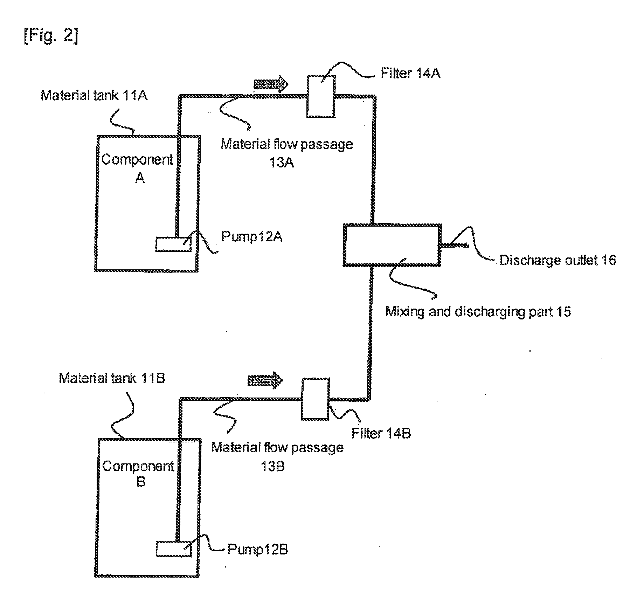

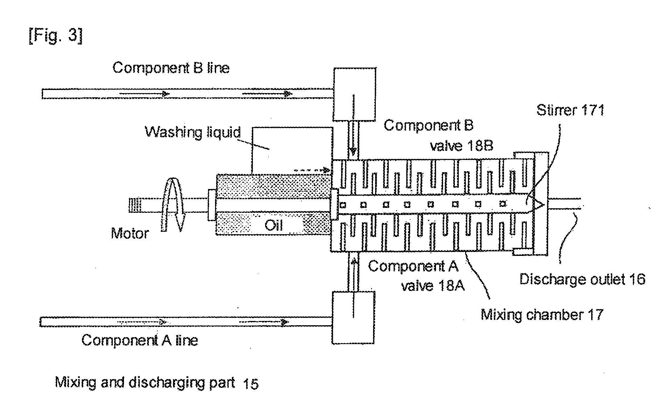

The configuration and operation of a RIM machine will be described based on Figs. 2 and 3, taking mixing of components (A) and (B) described further below as an example. Fig. 2 is a drawing describing the configuration of a RIM machine and Fig. 3 is a descriptive diagram showing the configuration of the mixing and discharging part of a RIM machine.

The RIM machine is comprised of material tank 11A storing component (A); material tank 11B storing component (B); mixing and discharging part 15 mixing and discharging components (A) and (B); material flow passage 13A connecting material tank 11A with mixing and discharging part 15; and material flow passage 13B connecting material tank 11B with mixing and discharging part 15. In the middle of material flow passages 13A and 13B, filters 14A and 14B are respectively provided for filtration of foreign matter in these components. A rotating shaft rotating at high speed or a static mixer is provided in mixing and discharging part 15 to mix components (A) and (B) arriving over material flow passages 13A and 13B. The starting material liquid is desirably stirred by rotating shaft 171, equipped with stirrer, that is driven by the rotation of a motor as shown in Fig. 3.

Components (A) and (B) are held at a reduced pressure in their respective material tanks mentioned above, adequately degassed, and maintained at a prescribed temperature. When degassing is inadequate, bubbles sometimes enter the molded product, compromising the properties and external appearance of the finished product and tending to reduce the mechanical strength of the molded product. Once they have been adequately degassed and rendered uniform in temperature, the respective components are forced by pumps 12A and 12B from material tanks 11A and 11B over material flow passages 13A and 13B and through filters 14A and 14B into mixing and discharging part 15. The mixture that has been rapidly and uniformly mixed in mixing and discharging part 15 passes through discharge hole 161 shown in Fig. 4 and is discharged from tip opening 162 of discharge hole 161.

When mixing components (A) and (B), described further below, component (A) is desirably heated to lower the viscosity thereof prior to mixing, from the perspective of eliminating bubble defects. Since component (A) is generally of high viscosity, heating to impart a viscosity of equal to or lower than 8,000 CPS is desirable from the perspective of facilitating mixing with component (B) by heating to impart some degree of fluidity prior to mixing with component (B). At and below this viscosity, bubble elimination prior to mixing can be facilitated when using an RIM machine, described further below. The temperature to which component (A) is heated is desirably one imparting a viscosity of equal to or lower than 6,000 CPS, preferably equal to or lower than 4,000 CPS. Normally, as plastic lens starting material liquid is being discharged, the supplying of plastic lens starting material liquid to mixing chamber 17, the mixing of plastic lens starting material liquid that has been supplied, and the discharging of plastic lens starting material liquid that has been mixed are simultaneously and continuously conducted in mixing and discharging part 15. The discharge flow rate and the halting of discharge can be conducted by controlling pumps 12A and 12B with a control element, not shown in the drawings. The turning ON/OFF and the rotational speed of the motor rotating a shaft equipped with stirrers 171 can also be controlled by the control element.

### Operation of the casting mold

The operation of casting mold 1 in the course of the casting of starting material liquid into casting mold 1 shown in Fig. 1 will be described based on Fig. 4.

Normally, on a continuous production line, multiple casting molds 1 are sequentially conveyed to and from a starting material liquid casting position. At the starting material liquid casting position, starting material liquid is cast into casting mold 1 by a starting material liquid mixing and discharging apparatus (mixing and discharging part) 15 that is disposed at that location. The casting mold 1 that is conveyed to the starting material liquid casting position is in a state where the casting hole tip opening 42 of casting inlet 40 is separated from the discharge hole (through-hole) tip opening 162 of mixing and discharging part discharge outlet 16. While starting material liquid is moving into cavity 10, casting mold 1 can also be in an inclined state relative to the horizontal plane. However, in an inclined state, a difference is produced between the rate at which the surface of the liquid rises along the perimeter and the rate at which the surface of the liquid rises near the center, creating the potential for the entrainment of gas. Thus, from the perspective of reducing optical defects, while the starting material liquid is moving within cavity 10, it is desirable for casting mold 1 to be secured roughly vertically relative to the horizontal plane. In that case, the casting mold 1 (Fig. 4(a)) that is being held in an inclined state relative to the horizontal plane is desirably moved in a state that is roughly vertical relative to the horizontal plane before the casting of starting material liquid into cavity 10 begins (Figs. 4(b) to (e)). The angle of incline is, for example, about 30 to 60° relative to the vertical direction. However, the angle of incline is not limited. Further, in the present invention, the term "roughly vertical" includes states that are inclined up to about 5° from the vertical state. In the embodiment shown in Fig. 4, casting inlet apical plane part 44 is inclined by an angle of 45° and discharge outlet tip 163 is inclined by an angle of 45°. Then, the posture of casting mold 1 has been changed from 45° to the vertical state in order to incline casting inlet apical plane part 44 by an angle of 45° from the horizontal state. Next, the casting of starting material liquid into casting hole 41 is begun by changing the posture of casting mold 1 from this state, in which it is being held, and bringing casting hole tip opening 42 and discharge hole tip opening 162 closer together. In this state, to the extent that at least a portion of the starting material liquid that is discharged through discharge hole 161 is introduced into casting hole 41, it is permissible for tip opening 42 of casting hole 41 and tip opening 162 of casting hole 161 to come into contact.

Subsequently, before the plastic lens starting material liquid that has been cast reaches the interior of cavity 10, casting mold 1 is secured in a state such that casting hole tip opening 42 and discharge hole tip opening 162 are connected. That is, in the present invention, the above change in posture is completed before starting material liquid is introduced into cavity 10. At that time, in the embodiment shown in Fig. 4, casting hole 41 and discharge hole 161 are connected in a 90° angle. In the present invention, the term "connected" refers to the state of contact between the tip opening of the casting hole and the tip opening of the discharge hole to the extent that starting material liquid discharged by the discharge hole is introduced into the casting hole without flowing downward.

Subsequently, this secured state is maintained until cavity 10 is filled with starting material liquid, thereby making it possible to suppress the generation of striae and bubbles due to the flowing of starting material liquid within cavity 10. Thus, a high-quality plastic lens can be obtained.

Desirable specific embodiments of each operation will be described below.

First, as set forth above, casting mold 1 is held in an inclined state with tip opening 42 of casting hole 41 separated from tip opening 162 of discharge hole 161. At that time, mixing and discharging apparatus 15 stops discharging while continuing to rotate stirrers 171 (Fig. 4(a)).

Next, while still being maintained at an incline, casting mold 1 is moved downward, bringing casting inlet apical plane part 44 into contact with discharge outlet tip 163. At that time, casting inlet apical plane part 44 is horizontal (Fig. 4(b)).

Next, mixing and discharging part 15 begins discharging (Fig. 4(c)). At that time, discharge hole 161 is horizontally aligned and casting inlet apical plane part 44 is horizontal. Thus, the starting material liquid does not enter casting hole 41. However, casting inlet apical plane part 44 is wetted by the starting material liquid, making it possible to reduce the entraining of bubbles during the subsequent casting.

Subsequently, casting mold 1 is rotated about the point of contact between casting inlet apical plane part 44 and the upper end of discharge outlet tip 163 to gradually bring casting mold 1 closer to vertical (Fig. 4(d)). In this manner, the starting material liquid that has been flowing down through the gap between casting inlet apical plane part 44 and discharge outlet tip 163 gradually diminishes, and the starting material liquid that is cast into casting hole 41 increases. Thus, the surface of the starting material liquid within casting hole 41 can be prevented from rising abruptly, reducing the entraining of bubbles.

Subsequently, casting mold 1 reaches vertical, casting inlet apical plane part 44 and discharge outlet tip 163 come into tight contact along their entire perimeters, and no more starting material liquid flows down through the gap (Fig. 4(e)). The starting material liquid is cast into cavity 10. In this manner, following the start of casting, as shown in Figs. 4(c) to (e), following the change in posture to start casting, the posture of casting mold 1 can be changed to connect tip opening 162 of discharge hole 161 with tip opening 42 of casting hole 41. From the perspective of smoothly casting starting material liquid into casting mold 1, the axial direction of casting hole 41 desirably intersects with the axial direction of discharge hole 161, with tip opening 42 of casting hole 41 and tip opening 162 of casting hole 161 connected. As shown in Fig. 4(e), the axial direction of casting hole 41 and the axial direction of discharge hole 161 are preferably brought together roughly perpendicularly.

Once cavity 10 has been filled with starting material liquid, starting material liquid overflowing from cavity 10 is collected in a liquid reservoir part through a discharge hole. The discharging of starting material liquid by mixing and discharging part 15 is stopped before the liquid reservoir part overflows. At that time, stirrer 171 of mixing and discharging part 15 continuously rotate (Fig. 4(f)).

Next, casting mold 1 is raised while still in a vertical posture at the same time as casting hole 41 is sealed by casting inlet sealing means 91. The casting inlet tip part is separated from discharge outlet 16 (Fig. 4(g)).

In the manufacturing method of the present invention, in addition to changing the posture of casting mold 1, it is also possible to move the mixing and discharging part 15 side to effect the above connection operation. The approach of casting mold 1 to secured discharge hole 161 is desirable to smoothly change the posture of casting mold 1. In that case, during the discharge of the starting material liquid, the securing of discharge hole 161 with its axial direction positioned horizontally, as shown in Fig. 4, is desirable for smooth casting.

Fig. 4 shows an embodiment of rotating the casting inlet relative to a secured discharge outlet and gradually reducing the gap on the bottom as a connection method in a process of gradually bringing casting hole tip opening 42 and discharge hole tip opening 162 closer together and causing a portion of the starting material liquid being discharged to flow in. However, the present invention in not limited to the above embodiment. For example, casting hole tip opening 42 and discharge hole tip opening 162 can be connected as shown in Fig. 4(e) by moving the casting mold in a vertical downward direction, horizontal direction, or inclined downward direction to bring the casting inlet and discharge outlet closer together.

The operation of the casting mold holding apparatus will be described next in detail from the beginning to the end of the casting based on the drawings.

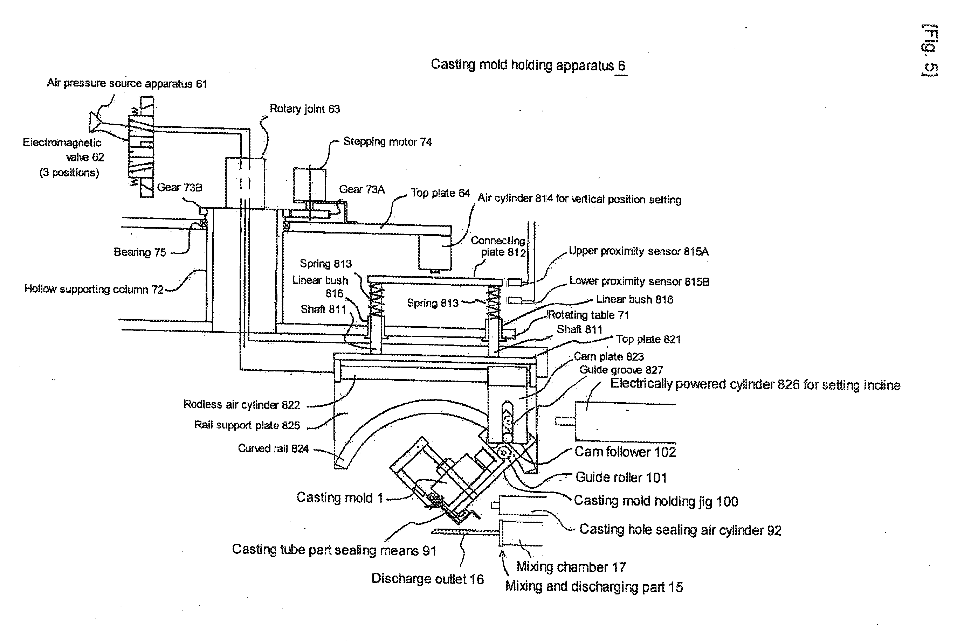

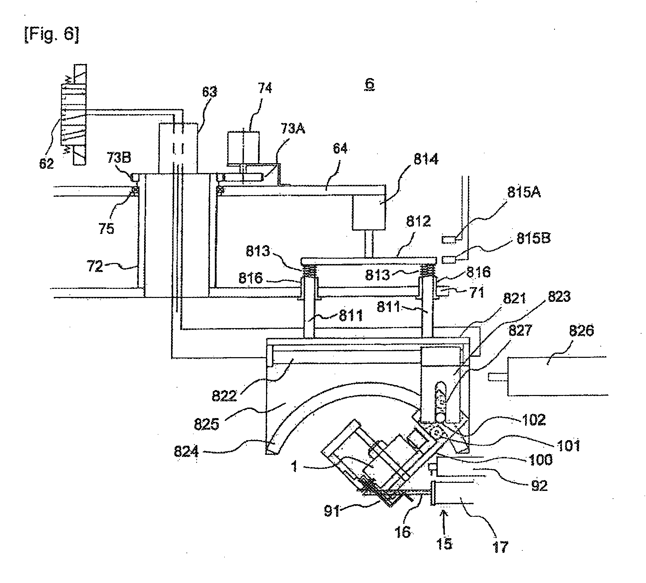

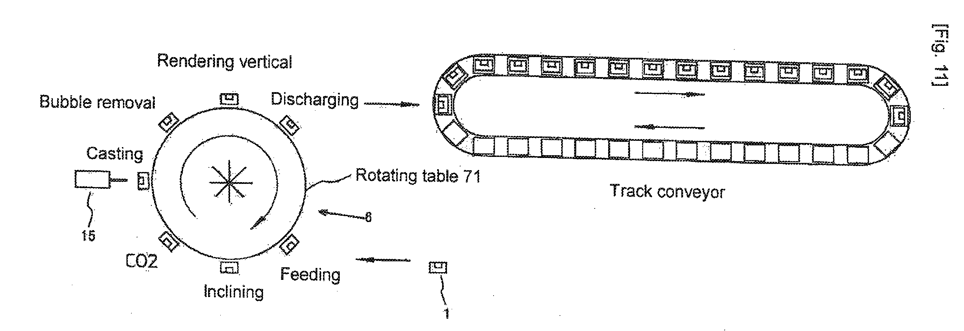

Fig. 5 is a descriptive drawing of an example of a casting mold holding apparatus comprising a means of holding a casting mold and a means of changing its posture. Figs. 6 to 10 are descriptive drawings of the operation of the casting mold in the apparatus shown in Fig. 5. Fig. 11 is a descriptive drawing of an example of a plastic lens manufacturing apparatus.

Casting mold holding apparatus 6 shown in Fig. 5 is an apparatus that holds a casting mold holding jig 100, on which casting mold 1 is mounted, changes the position and posture thereof, and connects and separates casting hole 41 of casting mold 1 to and from discharge hole 161 of mixing and discharging part 15. It comprises a conveying means that conveys a casting mold 1, into which starting material liquid is to be cast, into position for a casting step, and conveys casting mold 1 to the next step following the completion of casting; a holding means that holds casting mold 1 in a manner permitting change in the posture thereof; and a sealing means that seals the casting inlet of casting mold 1. The holding means comprises a posture changing means that changes the posture of casting mold 1 while it is being held by the holding means. The posture changing means comprises a means of changing the vertical position of casting mold 1 and a means of changing the incline of casting mold 1. The sealing means comprises a casting mold casting tube part sealing means positioned in casting mold holding jig 100, and a driving means driving the operation of the casting mold casting hole sealing means.

The conveying means is equipped with rotating table 71, hollow supporting column 72 serving as a shaft causing the rotation of rotating table 71, gear 73B provided at the upper end of the hollow support column, stepping motor 74 for driving rotation of hollow support column 72, and gear 73A for transmitting rotation of stepping motor 74 to gear 73B at the top end of hollow support column 72.

The vertical position changing means is equipped with multiple shafts 811 inserted in vertically movable fashion in through-holes provided in rotating table 71; connecting plate 812 connecting the top ends of shafts 811; springs 813 (in the present embodiment, wound about each of the shafts) provided between connecting plate 812 and rotating table 71 to impart upward forces to shafts 811; air cylinder 814 for vertical position setting for countering the elastic restoring force of springs 813 and pressing connecting plate 812 downward; and sensors detecting the height of connecting plate 812 (upper proximity sensor 815A and lower proximity sensor 815B).

The incline changing means is equipped with top plate 821 connected to the bottom end of shaft 811; rodless air cylinder 822 provided on top plate 821 (also referred to simply as a "rodless cylinder" hereinafter); cam plate 823 positioned on the piston portion of rodless air cylinder 822; curved rail 824 for rotating and displacing casting mold holding jig 100; rail support plate 825 for mounting curved rail 824 to top plate 821; and electrically powered cylinder 826 for setting incline by pushing cam plate 823 to the inside (referred to simply as an "electric cylinder" hereinafter). Rodless cylinder 822 is disposed so that the piston portion thereof moves in the diametric direction of rotating table 71. Curved rail 824 has a track in the form of a circular arc. The center of the circle containing the circular arc is set to fall above the casting hole outside opening of the casting inlet apical plane part 44 of casting mold 1 held in casting mold holding jig 100. Thus, casting mold 1 is held in inclinable fashion centered above tip opening 42 of casting hole 41. The piping for feeding and discharging air to and from rodless cylinder 822 passes through hollow support column 72 and electromagnetic valve 62, connecting with air pressure source apparatus 61. Thus, air can be fed to and discharged from rodiess cylinder 822 without being affected by rotation of rotating table 71. Electric cylinder 826 can also be positioned on the casting position.

The sealing means is provided on casting mold holding jig 100, and seals casting hole 41 so that the starting material liquid that has been cast does not flow down outside casting mold 1 once the casting of starting material liquid has been completed. For example, the sealing means can be a plate-like member having a groove (sealing groove). By moving this member, casting tube part 43 is pressed into the sealing groove, and the groove grips casting tube part 43 from the outside, sealing casting hole 41. To seal casting hole 41 by this method, casting tube part 43 is desirably made of an elastic resin. Reference can be made to Japanese Unexamined Patent Publication (KOKAI) Nos. 2006-205710 and 2006-231600, for example, for sealing means.

The sealing means driving means is equipped with casting tube sealing air cylinder 92 for pushing inward the casting tube sealing means provided on casting mold holding jig 100. Casting tube sealing air cylinder 92 can also be positioned at the casting position.

Fig. 11 is a descriptive drawing (layout diagram) of an example of the plastic lens manufacturing apparatus. The apparatus shown in Fig. 11 is equipped with mixing and discharging apparatus 15 and casting mold holding apparatus 6.

Mixing and discharging apparatus 15 is secured at the casting position so that the axial direction of discharge hole 161 is horizontal and faces the center in the diametric direction of the rotating table.

Casting mold holding jig 100, to which casting mold 1 is secured, is conveyed by a track conveyor to the filling part. It is then removed from the track conveyor and mounted on casting mold holding apparatus 6 at the feeding position. The mounting of casting mold holding jig 100 on casting mold holding apparatus 6 is achieved by matching the guide roller 101 of casting mold holding jig 100 to curved rail 824 of casting mold holding apparatus 6, and causing cam follower 102 of casting mold holding jig 100 to pass through guide groove 827 in cam plate 823 of casting mold holding apparatus 6. Subsequently, rotating table 71 is rotated, causing casting mold 1 to move to an inclined position. Air is supplied to rodless cylinder 822, causing the piston to move outward. Thus, casting mold holding jig 100 is held in an inclined position.

Next, in the apparatus shown in Fig. 11, rotating table 71 is rotated to move casting mold 1 to a carbon dioxide feeding position and carbon dioxide is fed into the interior of casting mold 1. Carbon dioxide generally has better solubility in the starting material liquid than air. When the starting material liquid is cast into casting mold 1 filled with carbon dioxide, since any gas bubbles that mix into the starting material liquid during casting will be comprised of carbon dioxide, small gas bubbles can be eliminated by dissolution of the carbon dioxide into the starting material liquid.

Rotating table 71 is then further rotated, moving casting mold 1 to the casting position. The operation at the casting position will be described further below.

Casting is completed by filling cavity 10 with starting material liquid. Once casting has been completed, rotating table 71 is further rotated, moving casting mold 1 to a bubble removing position provided as needed. Bubble removal is a step in which the piston portion of rodless cylinder 822 is moved to incline casting mold 1, thereby discharging from discharge outlet 50 of casting mold 1 any bubbles that have mixed into cavity 10. As shown in Fig. 1, in casting mold 1 having discharge hole 51 above cavity 10, inclining casting mold 10 permits the discharge of bubbles in cavity 10 through discharge hole 51. Since no space comprised of gas is normally present in cavity 10 when casting is completed, the starting material liquid flows little during inclining to remove bubbles, preventing the formation of severe striae.

Subsequently, rotating table 71 is rotated to move casting mold 1 to the vertical position and rodless cylinder 822 and electric cylinder 826 are driven to render casting mold 1 vertical. Rotating table 71 is then rotated to move casting mold 1 to the discharge position. Casting mold 1 is removed from casting mold holding apparatus 6 and moved back to the track conveyor. Casting mold 1 is then moved to the next step. During displacement by the track conveyor, the polymerization reaction is further advanced at low temperature (room temperature, for example) (a low temperature polymerization step). Subsequently, casting mold 1 is removed from the track conveyor and placed in a high temperature furnace, where it is heated to conduct polymerization at high temperature (the main polymerization step).

When discharge outlet 50 and casting inlet 40 are bent during low temperature polymerization to break off the resin that has polymerized in discharge hole 51 and casting hole 41, the step of removing the molded product, described further below, can be facilitated.

In the example shown in Fig. 11, there are seven steps (feeding, inclining, CO₂, casting, bubble removal, rendering vertical, and discharging) and an idle step during one turn of rotating table 71. Thus, eight units of the holding means are provided at equal angles on rotating table 71 to permit the implementation of each step simultaneously and in parallel.

The operation at the casting position of casting mold holding apparatus 6 will be described next with Figs. 5 to 10.

First, stepping motor 74 is driven to turn rotating table 71, thereby moving casting mold 1 to the starting material liquid casting position. Thus, casting mold 1 is disposed so that the tip opening 42 of casting hole 41 of casting mold 1 aligns perpendicularly with the tip opening 162 of discharge hole 161 of mixing and discharging part 15 (Fig. 5). At that time, casting mold 1 is held so that the casting inlet apical plane part 44 is positioned on a horizontal plane parallel to discharge outlet 161 of mixing and discharging part 15 (see Fig. 4(a)).

Once positioning has been completed, air is fed into vertical position setting air cylinder 814 to extend the rod, pushing down connecting plate 812. Thus, the upper end of tip opening 42 of casting mold casting hole 41 contacts the upper end of discharge hole tip opening 162 (see Fig. 4(b)). When the position of connecting plate 812 in this state is detected by lower proximity sensor 815B, electromagnetic valve 62 switches to an intermediate equilibrium state and the piston portion of rodless air cylinder 822 is freed (Fig. 6). The discharging of starting material liquid begins from discharge hole 161 of mixing and discharging apparatus 15 (see Fig. 4(c)). This point will be described in greater detail below.

Next, the rod of electric cylinder 826 extends horizontally at a preset movement speed, gradually bringing casting mold 1 closer to being perpendicular to the horizontal plane. At that time, a portion of the starting material liquid being discharged begins to flow into casting hole 41 (see Fig. 4(d)).

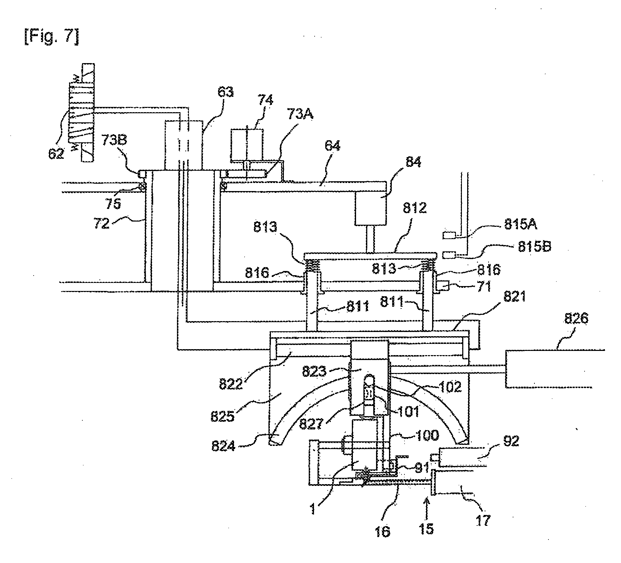

Subsequently, the rod of electric cylinder 826 extends further, positioning casting mold 1 perpendicular to the horizontal plane (Fig. 7). In this state, tip opening 42 of casting hole 41 connects with tip opening 162 of discharge hole 161, eliminating the flow of starting material liquid down through the gap between the tip of casting hole 41 and the tip of discharge hole 161 (see Fig. 4(e)). The above change in posture is carried out before the starting material liquid reaches the interior of cavity 10, after which casting mold 1 is secured to prevent the generation of optical defects due to flowing of the starting material liquid within cavity 10. A high-quality plastic lens can be thus obtained.

The starting material liquid rising within cavity 10 eventually reaches discharge hole 51. With cavity 10 thus having been filled with starting material liquid, the discharge of starting material liquid by mixing and discharging apparatus 15 can be stopped (see Fig. 4(f)). This point will be described in greater detail below.

To detect when the starting material liquid reaches discharge hole 51 as set forth above, the time required for cavity 10 to fill with starting material liquid can be calculated in advance from the flow rate and content volume of cavity 10 and detection can be made based on the time that is calculated, or the liquid surface in liquid reservoir part 53 (see Fig. 1) positioned in the upper part of above casting mold 1 can be detected with a sensor.

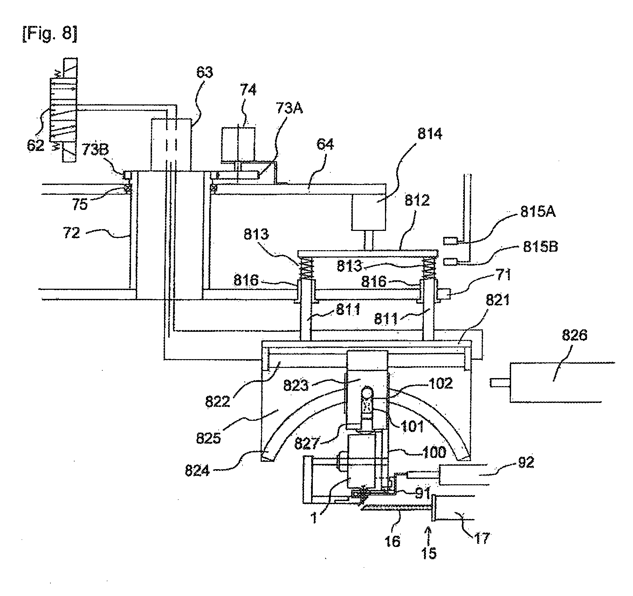

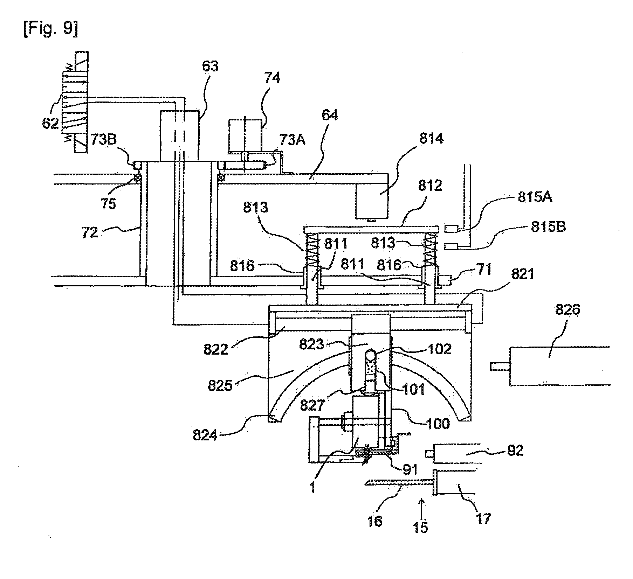

Once the casting of the starting material liquid has been completed, the rod of electric cylinder 826 is retracted. The cylinder of casting hole sealing air cylinder 92 is extended to drive the casting hole sealing means, thereby sealing casting hole 41 (Fig. 8). Subsequently, the rod of vertical position setting air cylinder 814 is retracted. Thus, connecting plate 812 is raised by spring 813, and casting inlet apical plane part 44 of casting mold 1 separates from discharge outlet tip 163 (see Figs. 4(g) and 9).

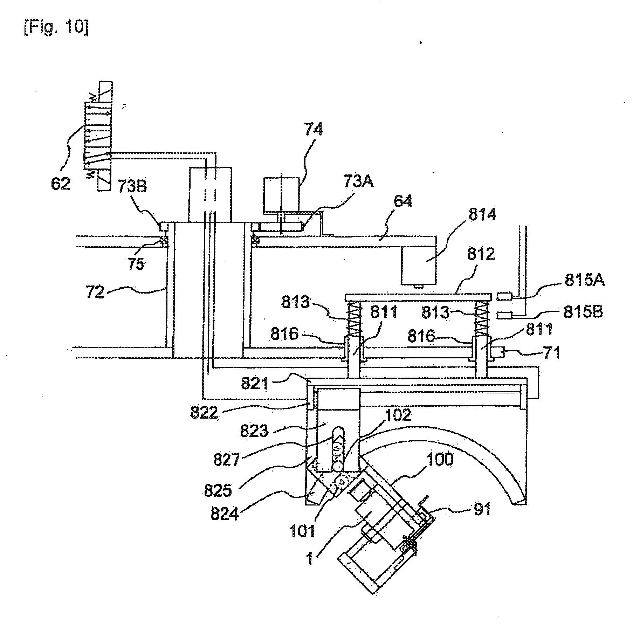

The return of connecting plate 812 above is determined by the detection of connecting plate 812 by upper proximity sensor 815A. Stepping motor 74 rotates a certain amount based on the signal of upper sensor 815A, turning rotating table 71. Thus, casting mold 1 is moved to the bubble removal position. Simultaneously, air is fed from outside rodless cylinder 822, causing the piston portion to move inward and inclining casting mold 1 to the reverse side into the bubble removal posture (Fig. 10).

The change in the posture of casting mold 1 up to when the starting material liquid reaches the interior of cavity 10 has been described above in an embodiment where casting mold 1, which is in an inclined state relative to the horizontal plane, is moved vertically downward, after which the incline of casting mold 1 relative to the horizontal plane is changed. However, the change in the posture of casting mold 1 is not limited to the above embodiment. The change in the posture of casting mold 1 can be carried out simply by vertically displacement or change of incline. The operation of the various apparatuses for changing the posture as set forth above can be controlled by a control element, not shown in the drawings. This control can also be linked to control of the mixing and discharging apparatus.

### Stopping and recommencing the discharge

The above-described steps from casting the plastic lens starting material liquid to obtaining a molded product can be sequentially conducted with multiple casting molds 1 to continuously manufacture multiple plastic lenses. In that case, once the casting of starting material liquid into a given casting mold 1 has been completed, during the period required to convey another casting mold 1 to the casting position and prepare it for casting, the discharge of starting material liquid from discharge hole 161 of mixing and discharging part 15 is desirably stopped. The temporary stopping of the discharge of starting material liquid in this manner is desirable to reduce the amount of starting material liquid that is wasted. However, since the polymerization reaction of the starting material liquid in the mixing chamber progresses even when the discharge has been stopped, the polymerization reaction progresses in a nonuniform state if stirring is stopped. Accordingly, from the perspective of achieving a uniform polymerization reaction, stirring is desirably continued in the mixing chamber even when the discharge has been stopped. In that case, since the starting material liquid that is retained in discharge hole 161 while the discharge is stopped is not stirred, it is desirably expelled when discharging is recommenced and not introduced into the next casting mold 1.

### Removal of the cast product

Once the main polymerization reaction has ended, casting mold 1 is taken out of the high-temperature furnace. Casting mold 1 is then removed and the molded product is taken out to obtain a plastic lens. At that time, casting inlet 40 and discharge outlet 50 can be manually or automatically bent to separate the polymerized product in casting hole 41 and discharge hole 51 from the polymerized product in cavity 10, yielding a lens-shaped molded product.

### [Plastic lens starting material liquid]

Next, details of plastic lens starting material liquid will be described.

The method of manufacturing of the present invention is suitably employed in manufacturing a plastic lens made of plastic from a highly viscous starting material liquid with a rapid initial rate of polymerization. For example, it is suitably employed for manufacturing a plastic lens from a starting material liquid that starts polymerization immediately after mixing and cures within 10 minutes. Since the present invention can provide lenses with excellent optical characteristics, it is suitable for use in manufacturing plastic eyeglass lenses required to have high optical characteristics. In the present invention, "polymerizable component" means a component having a polymerizable group, for example, can be a monomer or a prepolymer.

The multiple polymerizable components can comprise the following components (A) and (B), preferably consist of the following components (A) and (B).
Component (A): isocyanate terminal prepolymer component in the form of a reaction product of an aliphatic diisocyanate having an intramolecular cyclic structure and a diol having an average molecular weight of 300-2,500. Component (B): one or more aromatic diamines denoted by general formula (I) (in general formula (I), R₁, R₂ and R₃ are each independently any of a methyl group, ethyl group or thiomethyl group.).

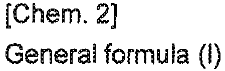

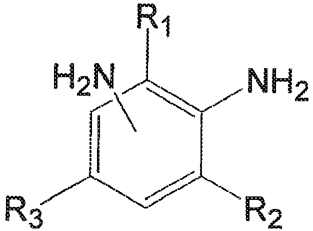

Components (A) and (B) will be described below.

### (i) Isocyanate terminal prepolymer component (A)

Component (A) is an isocyanate terminal prepolymer in the form of a reaction product of an aliphatic diisocyanate having an intramolecular cyclic structure and a diol having an average molecular weight of 300-2,500. Making the diisocyanate, one starting material of the aforementioned isocyanate terminal prepolymer, an aliphatic diisocyanate having an intramolecular cyclic structure facilitates control of the reaction during manufacturing or polymerizing the prepolymer and imparts suitable elasticity to the molded product finally obtained. Further, it imparts high heat resistance and good mechanical characteristics to the molded product obtained.

The aliphatic diisocyanate having an intramolecular cyclic structure is an aliphatic diisocyanate having a cyclic structure in the main chain or in the side chain. The cyclic structure may be alicyclic, aromatic, or heterocyclic. However, the aliphatic diisocyanate having an intramolecular cyclic structure is desirably an alicyclic diisocyanate from the perspective of preventing yellowing and maintaining adequate elasticity and hardness. Molded products obtained with isocyanate having an aromatic ring tend to yellow more than those obtained with alicyclic diisocyanate; molded products obtained with aliphatic chain-structured isocyanate tend to be softer and lose their shape more readily.

Examples of alicyclic diisocyanates are: 4,4'-methylenebis(cyclohexyl isocyanate), isophorone diisocyanate, 1,2-bis(isocyanate methyl)cyclohexane, 1,3-bis(isocyanate methyl)cyclohexane, 1,4-bis(isocyanate methyl)cyclohexane, 1,2-diisocyanate cyclohexane, 1,3-diisocyanate cyclohexane, and 1,4-diisocyanate cyclohexane. Examples of diisocyanates having aromatic rings are: m-xylylene diisocyanate, o-xylylene diisocyanate, p-xylylene diisocyanate, and m-tetramethylxylylene diisocyanate. It is particularly preferable that the alicyclic diisocyanate is at least one selected from the group consisting of 4,4'-methylenebis(cyclohexyl isocyanate), isophorone diisocyanate, and 1,3-bis(isocyanate methyl)cyclohexane.

The average molecular weight of the diol that is the other starting material of the isocyanate terminal prepolymer of component (A) is 300-2,500. In the present invention, "average molecular weight" means number average molecular weight. When the average molecular weight of the diol is less than 300, toughness cannot be imparted to the molded product obtained, and when greater than 2,500, the molded product obtained becomes soft and does not retain its shape. The average molecular weight of the diol is desirably 400-1,000.

Examples of diols having an average molecular weight of 300-2,500 are polyether diols and polyester diols. These diols are preferred because of good compatibility with the other component. In the case of a diol of poor compatibility, it becomes necessary to add another component in the form of a compatibility enhancer to maintain the transparency of the molded product obtained, potentially resulting in loss of transparency.

Examples of such diols are: polyoxyethylene glycol, polyoxypropylene glycol, polyoxytetramethylene glycol, polyester diol comprised of ethylene glycol and adipic acid, polyester diol comprised of propylene glycol and adipic acid, polyester diol comprised of diethylene glycol and adipic acid, polyester diol comprised of 1,4-butane diol and adipic acid, polyester diol comprised of neopentyl glycol and adipic acid, polyester diol comprised of 1,6-hexanediol and adipic acid, polyester diol comprised of 1,10-decanediol and adipic acid, polyester diol comprised of 1,4-butanediol and sebacic acid, polycaprolactone diol comprised of ethylene glycol and *ε*-caprolactone, polycaprolactone diol comprised of propylene glycol and *ε*-caprolactone, polycaprolactone diol comprised of diethylene glycol and *ε*-caprolactone, polycaprolactone diol comprised of 1,4-butane diol and *ε*-caprolactone, polycaprolactone diol comprised of neopentyl glycol and *ε*-capralactone, polycaprolactone diol comprised of 1,6-hexane diol and *ε*-caprolactone, polycaprolactone diol comprised of 1,10-decane diol and *ε*-caprolactone, and polycarbonate glycol. Preferred examples are: polyoxypropylene glycol, polyoxytetramethylene glycol, polyester diol comprised of 1,4-butane diol and adipic acid, polyester diol comprised of neopentyl glycol and adipic acid, polyester diol comprised of 1,6-hexane diol and adipic acid, and polyester diol comprised of 1,10-decane diol and adipic acid.

A diol comprising an intramolecular sulfur atom and having a molecular weight of 300-2,500 can be employed as a starting material of isocyanate terminal prepolymer component (A). Incorporation of a sulfur atom in a diol molecule permits an improvement of refractive index while suppressing decrease of abbe number. The existent state of a sulfur atom in a diol molecule is not specifically limited, but it is preferable that a sulfur atom is incorporated in a molecule by at least one bonding pattern among a sulfide bond, disulfide bond, thioester bond, dithioester bond, thiocarbonate bond and dithiocarbonate bond. By incorporating a sulfur atom by the above bonding pattern, component (A) is afforded a good compatibility with other components, and a molded product with no coloring and excellent transparency can be obtained. In contrast, a sulfur atom incorporated in the molecule by a bonding pattern other than above tends to deteriorate a compatibility of component (A) with other components. In that case, it becomes necessary to add another component in the form of a compatibility enhancer to maintain the transparency of the molded product obtained, potentially resulting in remarkable coloring. In view of the above matters, the other starting material of the isocyanate terminal prepolymer of component (A) preferably comprises an intramolecular sulfur atom by at least one bonding pattern among a sulfide bond, disulfide bond, thioester bond, dithioester bond, thiocarbonate bond and dithiocarbonate bond.

The isocyanate group content of isocyanate terminal prepolymer component (A) desirably falls within a range of 10-20 mass percent. When the above-stated isocyanate group content is equal to or greater than 10 mass percent, a molded product with high hardness can be obtained, and when the above-stated range is equal to or less than 20 mass percent, a molded product with high toughness (adequate strength) can be obtained. The above-stated isocyanate group content further preferably falls within a range of 11-15 mass percent.

### (ii) Aromatic diamine component (B)

Component (B) is one or more aromatic diamines denoted by general formula (I) above. In general formula (I), R₁, R₂, and R₃ are each independently any of a methyl, ethyl, or thiomethyl group. Employing substituents R₁, R₂, and R₃ mentioned above can suppress crystallinity and enhance compatibility with the other components. When these substituents are absent or present in low numbers, crystallinity rises, resulting in handling difficulty. When employing the other substituents, compatibility with the other components deteriorates, resulting in apprehensively decreasing the transparency of the material obtained.

The following compounds are more specific examples of the above-stated aromatic diamines: 1,3,5-trimethyl-2,4-diaminobenzene, 1,3,5-trimethyl-2,6-diaminobenzene, 1,3,5-triethyl-2,4-diaminobenzene, 1,3,5-triethyl-2,6-diarninobenzene, 1,3,5-trithiomethyl-2,4-diaminobenzene, 1,3,5-trithiamethyl-2,6-diaminobenzene, 3,5-diethyl-2,4-diaminotoluene, 3,5-diethyl-2,6-diaminotoluene, 3,5-dithiomethyl-2,4-diaminotoluene, 3,5-dithiomethyl-2,6-diarninota8uene, 1-ethyl-3,5-dimethyl-2,4-diaminobenzene, 1-ethyl-3,5-dimethyl-2,6-diaminobenzene, 1-ethyl-3,5-dithiomethyl-2,4-diaminobenzene, 1-ethyl-3,5-dithiomethyl-2,6-diaminobenzene, 1-thiomethyl-3,5-dimethyl-2,4-diaminobenzene, 1-thiomethyl-3,5-dimethyl-2,6-diaminobenzene, 1-thiomethyl-3,5-diethyl-2,4-diaminobenzene, 1-thiomethyl-3,5-diethyl-2,6-diaminobenzene, 3-ethyl-5-thiomethyl-2,4-diaminotoluene, 3-ethyl-5-thiomethyl-2,6-diaminotoluene, and 3-thiomethyl-5-ethyl-2,4-diaminotoluene.

In th above-listed aromatic diamines, R₁ is desirably a methyl group and R₂ and R₃ each desirably represent either an ethyl group or thiomethyl group, in which case the molded product obtained tends not to haze and can be imparted with adequate toughness. More specific examples of the above-stated aromatic diamines are: 3,5-diethyl-2,4-diaminotoluene, 3,5-diethyl-2,6-diaminotoluene, 3,5-dithiomethyl-2,4-diaminotoluene, and 3,5-dithiomethyl-2,6-diaminotoluene.

As for the mixing ratio of components (A) and (B), the molar ratio of the isocyanate group of component (A) with respect to the amino group of component (B) desirably falls within a range of 1.00-1.15 from the perspective of achieving adequate toughness (strength). The above-stated molar ratio further preferably falls within a range of 1.02-1.12.

To the extent that the transparency and strength of the molded product are not lost, additives such as mold release agents, anti-oxidants, ultraviolet stabilizers, color blockers, and the like may be added as needed to the plastic lens starting material liquid. Examples of additives are described in columns 6 and 7 of U.S. Patent No. 6,127,505; however, the present invention is not limited thereto.

### [Manufacturing apparatus of plastic lens]

The manufacturing apparatus of a plastic lens of the present invention is used in the method of manufacturing a plastic lens of the present invention, and comprises a mixing and discharging means that stirs and discharges a plastic lens starting material liquid comprising multiple polymerizable components, a casting mold holding means that holds a casting mold in movable fashion, a posture changing means that changes a posture of the casting mold being held by the casting mold holding means, and a control element that controls at least one from among stirring and discharging by the mixing and discharging means and posture changing by the posture changing means.

As described for the method of manufacturing of the present invention, the posture changing means in the manufacturing apparatus of the present invention can comprise a vertical position changing means that changes a position of the casting mold in a vertical direction relative to a horizontal plane, and an incline changing means that changes an incline of the casting mold relative to the horizontal plane. Details of the manufacturing apparatus of the present invention comprising the posture changing means are as described above for the method of manufacturing a plastic lens of the present invention.

The present invention is useful in the field of eyeglass lens manufacturing.

### [Brief descriptions of drawings]

[Fig. 1] A schematic sectional view of an example of a casting mold that can be employed in the present invention.
[Fig. 2] A descriptive drawing of the structure of a RIM machine.
[Fig. 3] A descriptive drawing of the structure of the mixing and discharging part of a RIM machine.
[Fig. 4] A descriptive drawing of the operation of the casting mold during the casting of starting material liquid.
[Fig. 5] A descriptive drawing of an example of a casting mold holding apparatus.
[Fig. 6] A descriptive drawing of the operation of the casting mold in the apparatus shown in Fig. 5.
[Fig. 7] A descriptive drawing of the operation of the casting mold in the apparatus shown in Fig. 5.
[Fig. 8] A descriptive drawing of the operation of the casting mold in the apparatus shown in Fig. 5.
[Fig. 9] A descriptive drawing of the operation of the casting mold in the apparatus shown in Fig. 5.
[Fig. 10] A descriptive drawing of the operation of the casting mold in the apparatus shown in Fig. 5.
[Fig. 11] A descriptive drawing of an example of a plastic lens manufacturing apparatus.

## Claims

1. A method of manufacturing a plastic lens comprising:
discharging a plastic lens starting material liquid from a tip opening of a discharge hole of a mixing and discharging part (15), the mixing and discharging part comprising a mixing chamber comprising a stirring means that stirs a plastic lens starting material liquid comprising multiple polymerizable components and the discharge hole communicating with the mixing chamber;
casting the plastic lens starting material liquid that has been discharged into a casting mold (1), the casting mold comprising a cavity and a casting hole for introducing the plastic lens starting material into the cavity, and the plastic lens starting material being cast into the casting mold through a tip opening of the casting hole; and
polymerizing the plastic lens starting material that has been cast within the casting mold (1) to obtain a polymerized product, wherein
the plastic lens starting material liquid is discharged through the discharge hole while maintaining the casting mold (1) in a state in which the tip opening of the casting hole is separated from the tip opening of the discharge hole, **characterized in that**
a posture of the casting mold (1) is then changed from that state to bring the tip opening of the casting hole closer to the tip opening of the discharge hole to begin the casting, as well as before the plastic lens starting material liquid that has been cast reaches an interior of the cavity, the tip opening of the casting hole and the tip opening of the discharge hole are connected to secure the casting mold (1), and the secured state is maintained until the cavity is filled with the plastic lens starting material liquid.

2. The method of manufacturing according to claim 1, wherein the casting mold (1) being maintained in the state in which the tip opening of the casting hole is separated from the tip opening of the discharge hole is in an inclined state relative to a horizontal plane, as well as in the secured state, the casting mold (1) is in roughly vertical state relative to the horizontal plane.

3. The method of manufacturing according to claim 1 or 2, wherein the casting mold (1) has a flat surface around the tip opening of the casting hole and in the secured state, the flat surface comes into tight contact with the tip opening of the discharge hole.

4. The method of manufacturing according to any of claims 1 to 3, wherein, during the discharging of the plastic lens starting material liquid, the discharge hole is secured with its axial direction positioned horizontally.

5. The method of manufacturing according to any of claims 1 to 4, wherein the change in the posture of the casting mold (1) is carried out by moving vertically downward the casting mold which is in the inclined state relative to the horizontal plane, and then changing the incline of the casting mold relative to the horizontal plane.

6. The method of manufacturing according to any of claims 1 to 5, wherein steps from the casting of the plastic lens starting material liquid to the obtaining of molded product are carried out with multiple casting molds sequentially to obtain multiple plastic lenses.

7. The method of manufacturing according to any of claim 6, wherein, after the cavity is filled with the plastic lens starting material liquid, the discharging is stopped while continuing stirring of the plastic lens starting material liquid in the mixing chamber, and the stopped discharging is recommenced when the plastic lens starting material liquid is cast into a new casting mold (1).

8. The method of manufacturing according to claim 7, wherein, after recommencing the discharging, the casting is carried out into the new casting mold (1) after discharging the plastic lens starting material liquid that has been retained within the discharge hole during the stopping of the discharging.

9. The method of manufacturing according to any of claims 1 to 8, wherein the plastic lens starting material liquid is a mixed liquid of the following component (A) and component (B):
component (A): isocyanate terminal prepolymer in the form of a reaction product of an aliphatic diisocyanate having an intramolecular cyclic structure and a diol having an average molecular weight of 300-2,500;
component (B): one or more aromatic diamines denoted by general formula (I) (in general formula (I), R₁, R₂ and R₃ are each independently any of a methyl group, ethyl group or thiomethyl group).

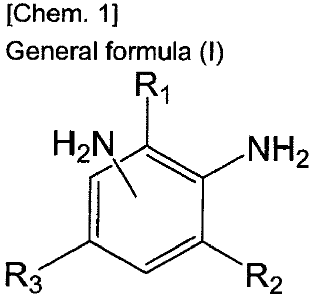

10. A manufacturing apparatus of a plastic lens used in the method of manufacturing a plastic lens according to any of claims 1 to 9, comprising:
a mixing and discharging means (15) that stirs and discharges a plastic lens starting material liquid comprising multiple polymerizable components;
a casting mold holding means (6) that holds a casting mold (1) in movable fashion;
a posture changing means that changes a posture of the casting mold (1) being held by the casting mold holding means (6); and
a control element that controls at least one from among stirring and discharging by the mixing and discharging means (15) and posture changing by the posture changing means.

11. The manufacturing apparatus of a plastic lens according to claim 10, wherein the posture changing means comprises a vertical position changing means that changes a position of the casting mold (1) in a vertical direction relative to a horizontal plane, and an incline changing means that changes an incline of the casting mold (1) relative to the horizontal plane.

## Patentansprüche

1. Verfahren zum Herstellen einer Kunststofflinse, umfassend:
Abgeben einer Kunststofflinsen-Startmaterialflüssigkeit von einer Spitzenöffnung eines Abgabelochs eines Misch- und Abgabeteils (15), wobei das Misch- und Abgabeteil eine Mischkammer umfasst, umfassend eine Rühreinrichtung, die eine Kunststofflinsen-Startmaterialflüssigkeit rührt, umfassend mehrere polymerisierbare Komponenten, und wobei das Abgabeloch mit der Mischkammer kommuniziert;
Gießen der Kunststofflinsen-Startmaterialflüssigkeit, die abgegeben worden ist, in eine Gussform (1), wobei die Gussform einen Hohlraum und ein Gussloch zum Einführen des Kunststofflinsen-Startmaterials in den Hohlraum umfasst, und wobei das Kunststofflinsen-Startmaterial in die Gussform durch eine Spitzenöffnung des Gusslochs gegossen wird; und
Polymerisieren des Kunststofflinsen-Startmaterials, das gegossen worden ist, innerhalb der Gussform (1), um ein polymerisiertes Produkt zu erhalten, wobei
die Kunststofflinsen-Startmaterialflüssigkeit durch das Abgabeloch abgegeben wird, während die Gussform (1) in einem Zustand gehalten wird, in dem die Spitzenöffnung des Gusslochs von der Spitzenöffnung des Abgabelochs separiert ist, **dadurch gekennzeichnet, dass**
eine Stellung der Gussform (1) dann von diesem Zustand geändert wird, um die Spitzenöffnung des Gusslochs näher an die Spitzenöffnung des Abgabelochs zu bringen, um das Gießen zu beginnen, sowie bevor die Kunststofflinsen-Startmaterialflüssigkeit, die gegossen worden ist, ein Inneres des Hohlraums erreicht, wobei die Spitzenöffnung des Gusslochs und die Spitzenöffnung des Abgabelochs verbunden sind, um die Gussform (1) zu sichern, und der gesicherte Zustand beibehalten wird, bis der Hohlraum mit der Kunststofflinsen-Startmaterialflüssigkeit gefüllt ist.

2. Verfahren zum Herstellen nach Anspruch 1, wobei die Gussform (1), die in dem Zustand gehalten wird, in dem die Spitzenöffnung des Gusslochs von der Spitzenöffnung des Abgabelochs separiert ist, in einem geneigten Zustand relativ zu einer horizontalen Ebene ist, und in dem gesicherten Zustand die Gussform (1) in einem ungefähr vertikalen Zustand relativ zu der horizontalen Ebene ist.

3. Verfahren zum Herstellen nach Anspruch 1 oder 2, wobei die Gussform (1) eine flache Oberfläche um die Spitzenöffnung des Gusslochs herum aufweist, und in dem gesicherten Zustand die flache Oberfläche in engen Kontakt mit der Spitzenöffnung des Abgabelochs gelangt.

4. Verfahren zum Herstellen nach einem der Ansprüche 1 bis 3, wobei während des Abgebens der Kunststofflinsen-Startmaterialflüssigkeit das Abgabeloch mit horizontal positionierter Axialrichtung gesichert wird.

5. Verfahren zum Herstellen nach einem der Ansprüche 1 bis 4, wobei die Veränderung der Stellung der Gussform (1) durchgeführt wird, indem man die Gussform vertikal abwärts bewegt, die in dem geneigten Zustand relativ zu der horizontalen Ebene ist, und dann die Neigung der Gussform relativ zu der horizontalen Ebene verändert.

6. Verfahren zum Herstellen nach einem der Ansprüche 1 bis 5, wobei Schritte vom Gießen der Kunststofflinsen-Startmaterialflüssigkeit bis zum Erhalten des gegossenen Produkts mit mehreren Gussformen sequenziell ausgeführt werden, um mehrere Kunststofflinsen zu erhalten.

7. Verfahren zum Herstellen nach Anspruch 6, wobei nach dem Füllen des Hohlraums mit der Kunststofflinsen-Startmaterialflüssigkeit die Abgabe gestoppt wird, während das Rühren der Kunststofflinsen-Startmaterialflüssigkeit in der Mischkammer fortgesetzt wird, und die gestoppte Abgabe wieder aufgenommen wird, wenn die Kunststofflinsen-Startmaterialflüssigkeit in eine neue Gussform (1) gegossen wird.

8. Verfahren zum Herstellen nach Anspruch 7, wobei nach der Wiederaufnahme des Abgebens das Gießen in die neue Gussform (1) hinein ausgeführt wird, nachdem die Kunststofflinsen-Startmaterialflüssigkeit abgegeben ist, die während des Stoppens der Abgabe innerhalb des Abgabelochs zurückgehalten wurde.

9. Verfahren zum Herstellen nach einem der Ansprüche 1 bis 8, wobei die Kunststofflinsen-Startmaterialflüssigkeit eine Mischflüssigkeit der folgenden Komponente (A) und Komponente (B) ist:
Komponente A: Isocyanat-Terminal-Prepolymer in der Form eines Reaktionsprodukts eines aliphatischen Diisocyanats mit einer zyklischen Intramolekularstruktur und einem Diol mit einem mittleren Molekulargewicht von 300-2500;
Komponente B: Ein oder mehrere aromatische Diamine, die durch die allgemeine Formel (I) bezeichnet werden (in der allgemeinen Formel (I) sind R₁, R₂ und R₃ jeweils unabhängig voneinander eine Methylgruppe, eine Ethylgruppe oder eine Thiomethylgruppe),

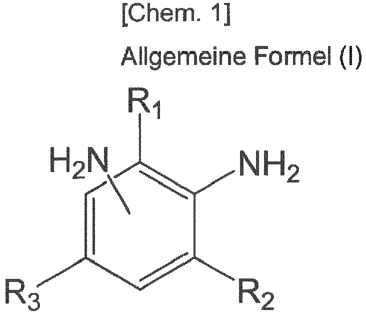

10. Gerät zum Herstellen einer Kunststofflinse, das in dem Verfahren zum Herstellen einer Kunststofflinse nach einem der Ansprüche 1 bis 9 verwendet wird, umfassend:
eine Misch- und Abgabeeinrichtung (15), die eine Kunststofflinsen-Startmaterialflüssigkeit, welche mehrere polymerisierbare Komponenten umfasst, rührt und abgibt;
eine Gussform-Halteeinrichtung (6), die eine Gussform (1) in beweglicher Weise hält;
eine Stellungsveränderungseinrichtung, die eine Stellung der Gussform (1) verändert, die durch die Gussform-Halteeinrichtung (6) gehalten wird; und
ein Steuerelement, das das Umrühren und Abgeben durch die Misch- und Abgabeeinrichtung (15) und/oder die Stellungsveränderung durch die Stellungsveränderungseinrichtung steuert.

11. Gerät zum Herstellen einer Kunststofflinse nach Anspruch 10, wobei die Stellungsveränderungseinrichtung eine Vertikalposition-Veränderungseinrichtung umfasst, die eine Position der Gussform (1) in einer vertikalen Richtung relativ zu einer horizontalen Ebene ändert, und eine Neigungsveränderungseinrichtung, die eine Neigung der Gussform (1) relativ zu der horizontalen Ebene ändert.

## Revendications

1. Procédé de fabrication d'une lentille en matière plastique comprenant :
l'évacuation d'un liquide de matière de départ de lentille en matière plastique à partir d'une ouverture d'embout d'un trou d'évacuation d'une partie de mélange et d'évacuation (15), la partie de mélange et d'évacuation comprenant une chambre de mélange comprenant un moyen d'agitation qui agite un liquide de matière de départ de lentille en matière plastique comprenant de multiples composants polymérisables et le trou d'évacuation communiquant avec la chambre de mélange ;
le coulage du liquide de matière de départ de lentille en matière plastique qui a été évacué dans un moule de coulage (1), le moule de coulage comprenant une cavité et un trou de coulage pour introduire la matière de départ de lentille en matière plastique dans la cavité, et la matière de départ de lentille en matière plastique étant coulée dans le moule de coulage à travers une ouverture d'embout du trou de coulage ; et
la polymérisation de la matière de départ de lentille en matière plastique qui a été coulée au sein du moule de coulage (1) pour obtenir un produit polymérisé, dans lequel
le liquide de matière de départ de lentille en matière plastique est évacué à travers le trou d'évacuation tout en maintenant le moule de coulage (1) dans un état dans lequel l'ouverture d'embout du trou de coulage est séparée de l'ouverture d'embout du trou d'évacuation, **caractérisé en ce que**
une posture du moule de coulage (1) est ensuite changée depuis cet état pour amener l'ouverture d'embout du trou de coulage plus près de l'ouverture d'embout du trou d'évacuation pour commencer le coulage, ainsi qu'avant que le liquide de matière de départ de lentille en matière plastique qui a été coulé atteigne un intérieur de la cavité, l'ouverture d'embout du trou de coulage et l'ouverture d'embout du trou d'évacuation sont raccordées pour solidariser le moule de coulage (1), et l'état solidarisé est maintenu jusqu'à ce que la cavité soit remplie du liquide de matière de départ de lentille en matière plastique.

2. Procédé de fabrication selon la revendication 1, dans lequel le moule de coulage (1) qui est maintenu dans l'état dans lequel l'ouverture d'embout du trou de coulage est séparée de l'ouverture d'embout du trou d'évacuation est dans un état incliné par rapport à un plan horizontal, ainsi que dans l'état solidarisé, le moule de coulage (1) est dans un état grossièrement vertical par rapport au plan horizontal.

3. Procédé de fabrication selon la revendication 1 ou 2, dans lequel le moule de coulage (1) a une surface plate autour de l'ouverture d'embout du trou de coulage et dans l'état solidarisé, la surface plate vient en contact étroit avec l'ouverture d'embout du trou d'évacuation.

4. Procédé de fabrication selon l'une quelconque des revendications 1 à 3, dans lequel, pendant l'évacuation du liquide de matière de départ de lentille en matière plastique, le trou d'évacuation est solidarisé avec sa direction axiale positionnée horizontalement.

5. Procédé de fabrication selon l'une quelconque des revendications 1 à 4, dans lequel le changement de posture du moule de coulage (1) est effectué en déplaçant verticalement vers le bas le moule de coulage qui est dans l'état incliné par rapport au plan horizontal, puis en changeant l'inclinaison du moule de coulage par rapport au plan horizontal.

6. Procédé de fabrication selon l'une quelconque des revendications 1 à 5, dans lequel les étapes allant du coulage du liquide de matière de départ de lentille en matière plastique à l'obtention du produit moulé sont effectuées avec de multiples moules de coulage séquentiellement pour obtenir de multiples lentilles en matière plastique.

7. Procédé de fabrication selon la revendication 6, dans lequel, après que le remplissage de la cavité avec le liquide de matière de départ de lentille en matière plastique, l'évacuation est arrêtée tout en poursuivant l'agitation du liquide de matière de départ de lentille en matière plastique dans la chambre de mélange, et l'évacuation arrêtée est recommencée lorsque le liquide de matière de départ de lentille en matière plastique est coulé dans un nouveau moule de coulage (1).

8. Procédé de fabrication selon la revendication 7, dans lequel, après recommencement de l'évacuation, le coulage est effectué dans le nouveau moule de coulage (1) après évacuation du liquide de matière de départ de lentille en matière plastique qui a été retenu au sein du trou d'évacuation pendant l'arrêt de l'évacuation.

9. Procédé de fabrication selon l'une quelconque des revendications 1 à 8, dans lequel le liquide de matière de départ de lentille en matière plastique est un liquide mixte des composant (A) et composant (B) suivants :
composant (A) : un prépolymère terminé par isocyanate sous la forme d'un produit de réaction d'un diisocyanate aliphatique ayant une structure cyclique intramoléculaire et un diol ayant une masse moléculaire moyenne de 300 à 2 500 ;
composant (B) : une ou plusieurs diamines aromatiques désignées par la formule générale (I) (dans la formule générale (I), R₁, R₂ et R₃ sont chacun indépendamment l'un quelconque parmi un groupe méthyle, un groupe éthyle ou un groupe thiométhyle).

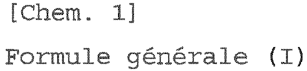

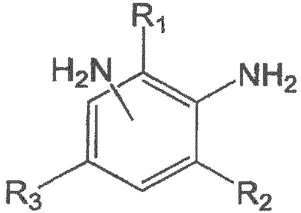

10. Appareil de fabrication d'une lentille en matière plastique utilisé dans le procédé de fabrication d'une lentille en matière plastique selon l'une quelconque des revendications 1 à 9, comprenant :
un moyen de mélange et d'évacuation (15) qui agite et évacue un liquide de matière de départ de lentille en matière plastique comprenant de multiples composants polymérisables ;
un moyen de tenue de moule de coulage (6) qui tient un moule de coulage (1) de manière mobile ;
un moyen de changement de posture qui change une posture du moule de coulage (1) qui est tenu par le moyen de tenue de moule de coulage (6) ; et
un élément de commande qui commande au moins l'un parmi l'agitation et l'évacuation par le moyen de mélange et d'évacuation (15) et le changement de posture par le moyen de changement de posture.

11. Appareil de fabrication d'une lentille en matière plastique selon la revendication 10, dans lequel le moyen de changement de posture comprend un moyen de changement de posture verticale qui change une position du moule de coulage (1) dans une direction verticale par rapport à un plan horizontal, et un moyen de changement d'inclinaison qui change une inclinaison du moule de coulage (1) par rapport au plan horizontal.
